(19) Europäisches Patentamt
European Patent Office
Office européen des brevets

(11) EP 1 319 635 B1

(12) EUROPEAN PATENT SPECIFICATION

(45) Date of publication and mention of the grant of the patent:
28.09.2011 Bulletin 2011/39

(51) Int Cl.:
C03B 37/014 (2006.01)

(21) Application number: 02090401.7

(22) Date of filing: 11.12.2002

(54) **Method of manufacturing a glass optical fibre preform**

Verfahren zur Herstellung einer Glasvorform für optische Fasern

Procédé de fabrication d'une préforme de verre pour fibre optiques

(84) Designated Contracting States:
DE FR GB IT

(30) Priority: 14.12.2001 JP 2001382283

(43) Date of publication of application:
18.06.2003 Bulletin 2003/25

(73) Proprietor: Shin-Etsu Chemical Co., Ltd.
Chiyoda-ku
Tokyo 100 (JP)

(72) Inventors:
• Oyamada, HIroshi,
Shin-Etsu Chemical Co., Ltd.
Annaka-shi,
Gunma-ken (JP)
• Otosaka, Tesuya,
Shin-Etsu Chemical Co., Ltd.
Annaka-shi,
Gunma-ken (JP)

(74) Representative: Pfenning, Meinig & Partner GbR
Patent- und Rechtsanwälte
Theresienhöhe 13
80339 München (DE)

(56) References cited:
WO-A-93/23341

• PATENT ABSTRACTS OF JAPAN vol. 1998, no. 04, 31 March 1998 (1998-03-31) -& JP 09 309735 A (SHINETSU QUARTZ PROD CO LTD), 2 December 1997 (1997-12-02)
• PATENT ABSTRACTS OF JAPAN vol. 1996, no. 08, 30 August 1996 (1996-08-30) & JP 08 091867 A (SUMITOMO METAL IND LTD), 9 April 1996 (1996-04-09)
• PATENT ABSTRACTS OF JAPAN vol. 1999, no. 04, 30 April 1999 (1999-04-30) & JP 11 001331 A (ASAHI GLASS CO LTD), 6 January 1999 (1999-01-06)

**Description**

BACKGROUND OF THE INVENTION

1. Field of the Invention

The present invention relates to a method for manufacturing a preform. More particularly, the present invention relates to a method for manufacturing a preform, the content of hydroxyl (OH) group of which is extremely lower than the conventional preform.

2. Description of the Related Art

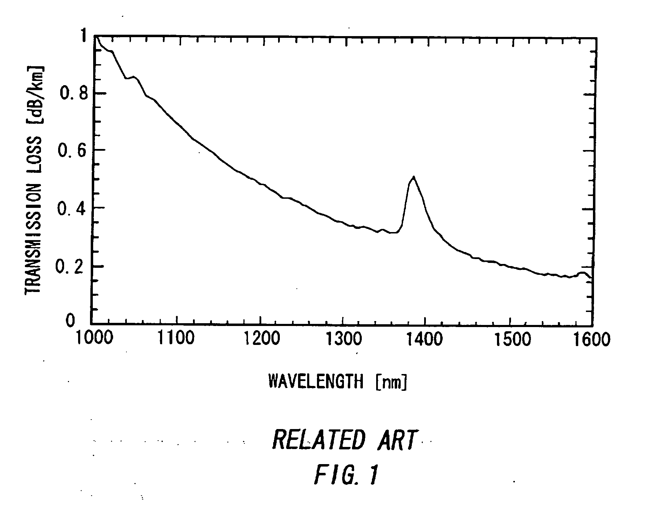

Fig. 1 shows a transmission-loss-curve of the light in a conventional general single-mode optical fiber. This optical fiber shown in Fig. 1 was obtained by drawing a preform, which is manufactured by a conventional soot method.

A quartz type optical fiber has a core formed by a quartz doped with germanium and a clad formed around the core. An amount of light that attenuates from an input end to an output end of the optical fiber is called as light loss. The light loss changes according to the wavelength. By reducing the light loss, the distance that can transmit a light without amplifying the light at the intermediate points can be increased. Therefore, the number of relay stations of an optical cable system can be reduced, and the cost of the whole communication system can be reduced.

As shown in Fig. 1, although the light loss is small especially in the wavelength band from 1300 nm to 1600 nm, the transmission band actually used is about 1310 nm or about 1550 nm because a cheap semiconductor laser can be used in this wavelength band.

Recently, the wavelength division multiplexing (WDM) method, which transmits simultaneously a plurality of signal lights, each of which has different wavelengths, by one fiber is in practical use as the technique for increasing the data-transmission capacity of an optical fiber. This WDM method uses the wavelength band around 1530 nm to 1600 nm. By increasing the number of the wavelengths or number of colors that are transmitted simultaneously, the data-transmission capacity of the WDM method can be further increased.

In order to increase the number of the wavelength transmitted simultaneously, the interval between each of the wavelengths has to be narrowed or the wavelength band to be used has to be widened. However, there is a limit for narrowing the interval of the wavelength. For example, when transmitting the signals, each of which has a wavelength of 40 Gb/s, interference is easily occurred if the interval of the wavelength is set to 1 nm or less. On the other hand, the method that widens a wavelength band needs a laser light source, which emits each wavelength, and an optical amplifier, which can amplify the whole wavelength bands. Recently, the laser light source and the optical amplifier, which cover whole wavelengths from 1300 nm to 1600 nm, are in practical use.

The great portion of light loss occurred in the wavelength band from 1300 nm to 1600 nm shown in Fig. 1 is caused by Rayleigh scattering. As shown in Fig. 1, a projected large peak of light loss exists in the wavelength about 1385 nm. This peak is produced when light is absorbed by vibrations of the hydroxy (OH) group contained in the optical fiber. Hereafter, this peak is called as OH peak. Even if the content of OH group in the optical fiber is only 1 ppm, a light loss of 65 dB/km occurs.

By manufacturing porous-glass-base-material using a soot method, such as a vapor-phase-axial-deposition (VAD) method, some of the OH groups can be removed from an optical fiber. The soot method manufactures a porous-glass-base-material by accumulating glass particles, the diameter of which is about 0.1 micrometers.

Then, the preform is manufactured by heating and vitrifying the porous-glass-base-material. The soot method heats the porous-glass-base-material in the gas atmosphere which contains chlorine before vitrifying the porous-glass-base-material and removes the OH group in the porous-glass-base-material by the reaction occurred between chlorine in the gas and the OH group in the porous-glass-base-material.

In Fig. 1, the amount of projection of the OH peak is about 0.14 dB/km. However, if the wavelength band from 1300 nm to 1600 nm is used for light transmission, the light loss in this wavelength band has to be reduce to about 0.33 db/km or less in the wavelength of 1300 nm. To achieve this purpose, the amount of projection of the OH peak has to be controlled to abut 0.05 dB/km or less.

If the large amount of chlorine is used in the heating and dehydration process, the effect of dehydration will be increased. However, the cost for manufacturing the preform will also be increased. Moreover, even if the large amount of chlorine is used without considering economical efficiency, the amount of projection of the OH peak could not be reduced lower than 0.05 dB/km.

JP 09309735 discloses a method of manufacturing a preform by depositing porous glass particles. The porous preform containing OH groups is a) preheated, b) dehydrated by reaction with halogenated silane, c) thereafter heated under reduced pressure in the presence of an inert gas and then d) vitrified at a higher temperature under reduced pressure of the same inert gas.

WO 93/23341 A describes a heat treatment facility for synthetic vitreous silica bodies. The treatment is performed in an inert gas containing deuterium. The resulting glass has a hydroxyl content of less than 1 ppm OH because of substantial removal of OH by exchange with deuterium.

SUMMARY OF THE INVENTION

Therefore, it is an object of the present invention to provide a method for manufacturing a preform which is capable of overcoming the above drawbacks accompanying the conventional art.

This object according to the invention is solved by a method comprising the features of claim 1 and of claim 2, respectively. Preferred embodiments of this method are defined in the dependent claims.

The first inert gas may be helium. The second inert gas may be helium, argon, or nitrogen.

The gas that contains chlorine may be diluted with third inert gas. $H_2O$ content of the third inert gas may be substantially 1 vol ppm or less. The third inert gas may be helium. The dehydrating may heat the porous-glass-base-material such that a void ratio of the porous-glass-base-material dehydrated by the dehydrating to be substantially 0.6 or over.

The dehydrating may heat the porous-glass-base-material such that time, which is required for decreasing a void ratio of the porous-glass-base-material continuously from an initial value of the void ratio before beginning the dehydrating to a value substantially equal to 0.6, to be substantially 10 minutes or more. The vitrifying may move the porous-glass-base-material relative to a heater that heats the porous-glass-base-material so that a void ratio of the porous-glass-base-material decreases continuously.

The heating may heat the porous-glass-base-material with the first heating temperature for 10 minutes or more. The heating may heat the porous-glass-base-material with the first heating temperature for 30 minutes or more. The heating may replace gas remaining inside the porous-glass-base-material, with the first inert gas in an atmosphere of the first inert gas, the $H_2O$ content of which is substantially 100 vol ppb or less.

The vitrifying may vitrify the porous-glass-base-material by heating the porous-glass-base-material in an atmosphere of second inert gas, the $H_2O$ content of which may be substantially 100 vol ppb or less. The method may further comprise forming second clad around the outside surface of the porous-glass-base-material vitrified by the vitrifying.

The features and advantages of the present invention will become more apparent from the following description of the embodiments taken in conjunction with the accompanying drawings.

BRIEF DESCRIPTION OF THE DRAWINGS

Fig. 1 shows a transmission-loss-curve of the light in a conventional general single-mode optical fiber.

Fig. 2 shows an example of the configuration of a porous-glass-base-material sintering apparatus 100.

Fig. 3 shows an example of preform 200 manufactured by the sintering apparatus 100 of the present embodiment.

Fig. 4 shows an example of the flow chart of the method for manufacturing a preform of the present embodiment.

Fig. 5 shows the transmission loss of light in the optical fiber obtained by drawing a preform manufactured by the above-mentioned example.

Fig. 6 shows the transmission loss of light in the optical fiber obtained by drawing a preform manufactured by the comparative example 1.

Fig. 7 shows the transmission loss of light in the optical fiber obtained by drawing a preform manufactured by the comparative example 2.

Fig. 8 shows the transmission loss of light in the optical fiber obtained by drawing a preform manufactured by the comparative example 3.

DETAILED DESCRIPTION OF THE INVENTION

The invention will now be described based on the preferred embodiments, which do not intend to limit the scope of the present invention, but exemplify the invention. All of the features and the combinations thereof described in the embodiments are not necessarily essential to the invention.

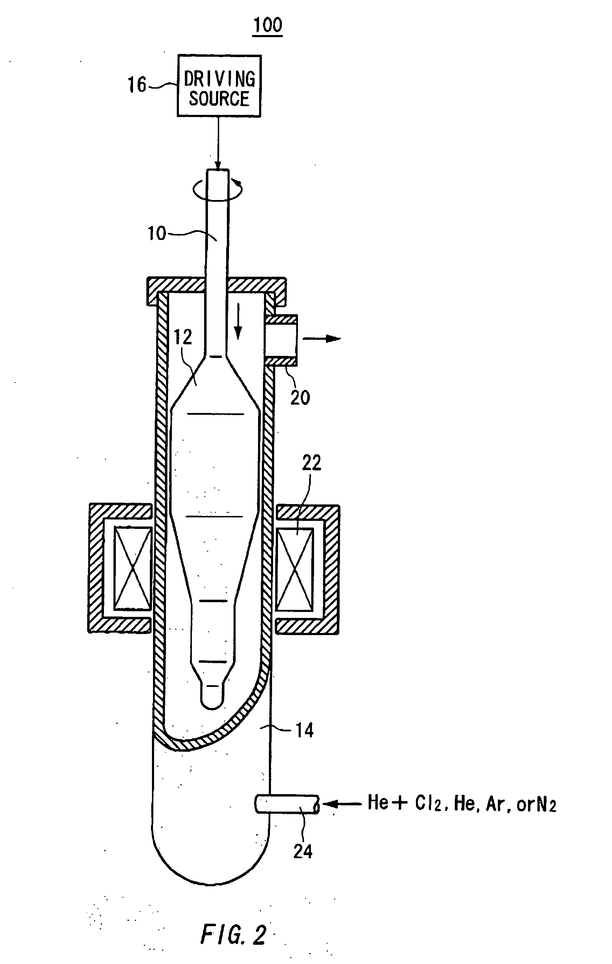

Fig. 2 shows an example of the configuration of a porous-glass-base-material sintering apparatus 100. The sintering apparatus 100 has a container 14, a heater 22, a gas introduction pipe 24, and a drive source 16. The container 14 is made from silica glass. A heater 22 is arranged around the container 14 to heat the container 14.

The gas introduction pipe 24 is connected to the bottom part of the container 14, and the mixed gas, which contains inert gas such as helium (He) gas and dehydration-reaction-gas such as chlorine ($Cl_2$) gas, is introduced into the container 14 through the gas introduction pipe 24.

An exhaust pipe 20 is connected to the top part of the container 14, and the mixed gas which travels through the container 14 from the bottom part of the container 14 is discharged from the exhaust pipe 20. The drive source 16 is provided in the upper part of the sintering apparatus 100. The drive source 16 is connected to a core rod 10.

The porous-glass-base-material 12 is formed around the circumference of the core rod 10 by such as VAD method before the dehydration process. The drive source 16 inserts the porous-glass-base-material 12 into the container 14 by descending the core rod 10 into the container 14. The container 14 is filled with the atmosphere of the mixed gas, which flowed from the gas introduction pipe 24, and the circumference of the container 14 is heated by the heater 22. Therefore, the porous-glass-base-material 12 inserted into the container 14 is heated under a mixed gas atmosphere to be dehydrated and sintered.

At the replacement process that will be mentioned later, the gas remaining inside pores of the porous-glass-base-material 12 is replaced by a first inert gas, such as helium. The porous-glass-base-material 12 has a plurality of pores. In the replacement process, the first inert gas is introduced into the container 14 through the gas introduction pipe 24 to fill the container 14 with the first inert gas.

Furthermore, at the vitrification process that will be mentioned later, the porous-glass-base-material 12 is heated and vitrified in the second inert gas atmosphere by introducing the second inert gas, such as helium, argon, or nitrogen, in the container 14 through the gas introduction pipe 24.

The type of the sintering apparatus 100 is not limited to the type shown in Fig. 2. For example, the sintering apparatus 100 may fix the position of the porous-glass-base-material 12 inside the container 14 and move the heater 22 relative to the porous-glass-base-material 12.

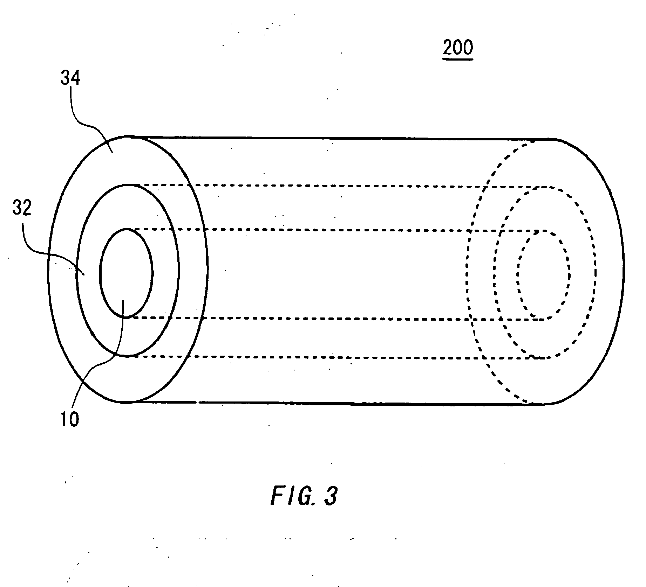

Fig. 3 shows an example of a preform 200 manufactured by the sintering apparatus 100 of the present embodiment. A preform 200 has a cylindrical core 10, made from quartz doped with germanium, and a clad 32, made from quartz, formed around the outside surface of the core 10.

A second clad 34 may be formed around the outside surface of the preform 200 to increase the thickness of the clad 32. The content of the OH group in the preform 200 is substantially 0.8 ppb or less. Moreover, the amount of projection of the OH peak in the curve that shows the transmission loss of the light of the optical fiber, which is obtained by drawing the preform 200, is substantially 0.05 dB/km or less. Therefore, the optical fiber obtained from the preform 200 can be used for light transmission in the wavelength band from 1300 nm to 1600 nm.

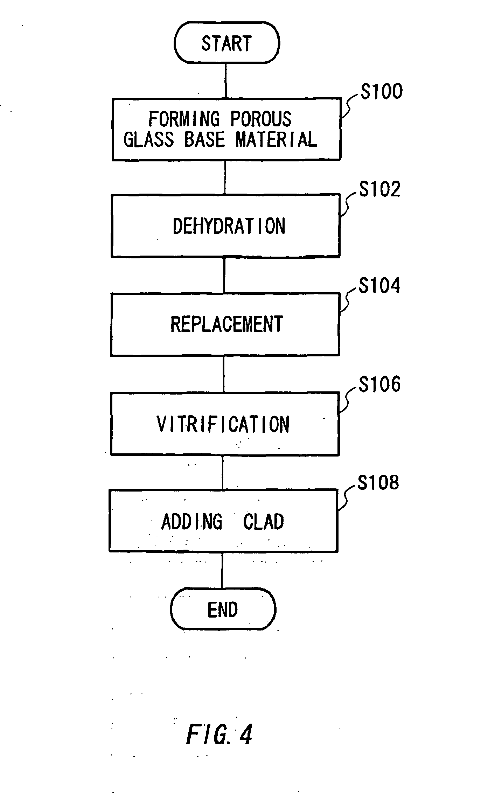

Fig. 4 shows an example of the flow chart of the method for manufacturing a preform of the present embodiment. First, glass particles are deposited on the circumference of the core rod 10 cylindrically by the vapor-phase axial deposition (VAD) method or an outside vapor deposition (OVD) method to form a porous-glass-base-material (S100). Next, dehydration-reaction gas such as chlorine and inert gas such as helium are introduced into the container 14 of the sintering apparatus 100, and the container 14 is heated at about 1100 °C for about 15 minutes using the heater 22. The drive source 16 inserts the porous-glass-base-material 12 into the heated container 14 to dehydrate and sinter the porous-glass-base-material 12 (S102).

The gas atmosphere containing chlorine may contain at least one of chlorine and the thionyl chlorine. Moreover, the gas containing chlorine may be diluted by the third inert gas such as helium. In this case, the $H_2O$ content in the third inert gas is about 1 vol ppm or less.

By controlling the $H_2O$ content in the third inert gas to be substantially 1 vol ppm or less, the amount of $H_2O$ absorbed inside the porous-glass-base-material 12 during the dehydration process, can be reduced. A dehydration process (S102) controls a void ratio of the dehydrated porous-glass-base-material 12 to be substantially 0.6 or less. Thereby, the amount of gas remaining inside the porous-glass-base-material 12 after the dehydration process (S102) can be reduced.

Moreover, the dehydrating process (S102) controls time, which is required for decreasing a void ratio of the porous-glass-base-material continuously from an initial value of the void ratio before beginning the dehydrating to a value substantially equal to 0.6, to be substantially 10 minutes or more. Thereby, the gas that contains hydrogen (H) can be diffused and emitted from the porous-glass-base-material 12 before the reduction of the void ratio and the absorption of the gas that contains hydrogen in the porous-glass-base-material 12 during the dehydration process (S102).

Next, the first inert gas, such as helium, is introduced into the sintering apparatus 100, and the container 14 is filled with the atmosphere of the first inert gas. Then, the porous-glass-base-material 12 is heated at a first heating temperature for 10 minutes or more, for example about 30 minutes, in the first inert gas atmosphere. Thereby, the gas, remaining in the porous-glass-base-material 12, is replaced by the first inert gas (S104). The replacement process (S104) heats porous-glass-base-material 12 at the temperature about 1000 °C or higher, which is one of examples of the first heating temperature. However, the first heating temperature is not limited to 1000 °C, and other temperatures can be used for the first heating temperature.

The replacement process (S104) replaces the gas remaining in the porous-glass-base-material 12 by the first inert gas in the atmosphere of the first inert gas, the $H_2O$ content of which is substantially 1 vol ppm or less. Furthermore, the replacement process (S104) replaces the gas remaining in the porous-glass-base-material 12 by the first inert gas by placing the porous-glass-base-material 12 in the atmosphere of the first inert gas for 10 minutes or more.

In order to further reduce the content of the OH group in the preform, the replacement process (S104) may replace the gas remaining in the porous-glass-base-material 12 by the first inert gas in the atmosphere of the first inert gas, the $H_2O$ content of which is substantially 100 vol ppb or less.

Next, the second inert gas, such as helium, argon, or nitrogen, is introduced into the sintering apparatus 100, and the container 14 is filled with the atmosphere of the second inert gas. Next, the porous-glass-base-material 12 is heated at a second heating temperature for about 30 minutes in the second inert gas atmosphere to vitrify the porous-glass-base-material 12 to form a preform (S106). One of examples of the second heating temperature is about 1500 °C, which is higher than the first heating temperature.

The vitrification process (S106) vitrifies the porous-glass-base-material 12 by heating the porous-glass-base-material 12 in the atmosphere of the second inert gas, the $H_2O$ content of which is 1 vol ppm or less. In order to further reduce the content of the OH group in the preform, the vitrification process (S106) may heat and vitrify the porous-glass-base-material 12 in the atmosphere of the second inert gas, the $H_2O$ content of which is substantially 100 vol ppb or less.

As explained in Fig. 2, the vitrification process (S108) continuously reduces the void ratio of the porous-glass-base-material 12 by moving the porous-glass-base-material 12 relative to the heater 22. When the thickness of a clad has to be increased, the second clad is further formed around the preform that is formed by the above-mentioned dehydration (S102), replacement (S104), and vitrification (S106) process (S108).

In addition, the heating temperature and processing time in each of the above-mentioned dehydration process (S102), replacement process (S104), and vitrification process (S106) are examples and are not limited to the above-mentioned values.

The mechanism of a dehydration process will be explained below. As shown in the equation (1) shown below, the water ($H_2O$) contained in the glass particles reacts with chlorine ($Cl_2$) and is discharged into the gaseous phase at the temperature about 1100 °C. $2H_2O + 2Cl_2 \rightarrow 4HCl + O_2$      (1)

Moreover, if the water ($H_2O$) contained in the glass particles floats in the gaseous phase in the form of water ($H_2O$), the hydrogen (H), which is discharged into the gaseous phase, may be absorbed into the porous-glass-base-material again in the vitrification process. Next, 'the condition, where the hydrogen (H) contained in the glass particles is discharged into the gaseous phase and absorbed into the porous-glass-base-material, will be explained below using a model. In the following, a porous body, which is a model of the porous-glass-base-material, is used for consideration.

It is assumed that N-number of pores are formed inside the porous body such that the pores, each of which has a diameter of De and a length of Le, are perpendicular to the surface of the porous-glass-base-material. This is the Parallel Pore model, which is well used in the analysis of a catalyst-filling layer,

The volume of the all of the pores (Vp) in the unit volume and the surface area of all of the pores (Sp) in the unit volume can be expressed by the following equations (2) and (3), respectively.

$$Vp = n \times \pi \times De \times De \times Le / 4 \quad (2)$$

$$Sp = n \times \pi \times De \times Le \quad (3)$$

The following equation (4) for calculating De can be obtained from both of the above equations (2) and (3).

$$De = 4 \times Vp/Sp \quad (4)$$

On the other hand, if the porous body is considered as an aggregate of spherical soot particles, and if the diameter of the soot particles is expressed by Ds, the volume of a soot particle Vs and the surface area of a soot particle Ss can be expressed by the following equations (5) and (6), respectively.

$$Vs = \pi \times Ds \times Ds / 6 \quad (5)$$

$$Ss = \pi \times Ds \times Ds \quad (6)$$

If the void ratio of a porous body is expressed as $\varepsilon$, and if the distribution of the diameters of the pores in the porous body is ignored, the volume of the all of the pores (Vp) in the unit volume and the surface area of all of the pores (Sp) in the unit volume can be calculated by the following equations (7) and (8), respectively.

$$Vp = Vs \times \varepsilon / (1 - \varepsilon) \quad (7)$$

$$Sp = Ss \quad (8)$$

The following equation (9) can be obtained from the above-mentioned equations (7) and (8).

$$De = 4Vp/Sp$$
$$= 4 \times Vs \times \varepsilon / \{ (1 - \varepsilon) \times Ss \}$$
$$= (2 \times Ds/3) \times \{ \varepsilon / (1 - \varepsilon) \} \quad (9)$$

The diameter Ds of a soot particle of the porous-glass-base-material was measured by the electron microscope photograph. The measured value of the diameter Ds of a soot particle was about 100 nm. In addition, the actual measured value of a void ratio $\varepsilon$ of the porous-glass-base-material manufactured by the typical VAD method is about 0.9.

It is assumed that the diameter of a soot particle De is decreased by the dehydration process, and the void ratio $\varepsilon$ is changed from 0.9, which is an actual measurement value, the diameter De of the soot particle De can be calculated as follows.

When $\varepsilon$ is 0.90, De is about 600 nm. When $\varepsilon$ is 0.85, De is about 380 nm. When $\varepsilon$ is 0.80, De is about 270 nm. When $\varepsilon$ is 0.75, De is about 200 nm. When $\varepsilon$ is 0.70, De is about 160 nm. When $\varepsilon$ is 0.65, De is about 120 nm. When $\varepsilon$ is 0.60, De is about 100 nm. When $\varepsilon$ is 0.55, De is about 80 nm. When $\varepsilon$ is 0.50, De is about 70 nm.

The gas inside a pore diffuses and repeatedly collides with the wall of the pore and other molecules while repeating a molecular thermal movement. The average diffusion speed Vt of a molecule can be expressed by the following equation (10).

$$Vt = \sqrt{(8 \times k \times T / \pi \times m)} \quad (10);$$

where k: Boltzmann constant ($1.4 \times 10^{-23}$ [J/K]), T: temperature of a molecule [K], m: mass of a molecule [kg]

The average diffusion speed Vt of a molecule is calculated based on the above-mentioned equation (10). According to the calculation, the average diffusion speed Vt of hydrogen chloride (HCl) molecule at 1100 °C was 910 m/s. The average diffusion speed Vt of hydrogen chloride (HCl) molecule at 1500 °C was 1040 m/s. The average diffusion speed Vt of $H_2O$ molecule at 1100 °C was 1280 m/s. The average diffusion speed Vt of $H_2O$ molecule at 1500 °C was 1450 m/s.

A collision frequency F among molecules can be expressed by the following equation (11).

$$(\text{area of cross-section where the molecules pass}) \times (\text{relative velocity}) \times (\text{concentration of molecules to collide with}) \quad (11)$$

Therefore, the collision frequency F can be expressed by the following equation (12).

$$F = (\pi \times d \times 2) \times \{ (\sqrt{2}) \times v \} \times C \quad (12);$$

where d: diameter of molecule; C: concentration of molecules to collide with.

The collision frequency F is calculated such that the molecule is considered as a rigid sphere and the diameter of the rigid sphere is set to be 3 Å. In the case of gas, the temperature of which is 1100 °C, the collision frequency F is calculated as $2.7 \times 10^9$ times. In the case of gas, the temperature of which is 1500 °C, the collision frequency F is calculated as $2.4 \times 10^9$ times.

Furthermore, a mean free path $\lambda$ of a molecule can be calculated by the following equation (13).

$$\lambda = Vt/f \quad (13)$$

The mean free path $\lambda$, which is the length of the path where the molecules advanced while collide with other molecules, is calculated by equation (13). According to the calculation, the mean free path $\lambda$ of hydrogen chloride (HCl) gas, the temperature of which is 1100 °C, is about 350 nm. The mean free path $\lambda$ of hydrogen chloride (HCl) gas, the temperature of which is 1500 °C, is about 400 The mean free path $\lambda$ of $H_2O$ gas, the temperature of which is 1100 °C, is about 500 nm. The mean free path $\lambda$ of $H_2O$ gas, the temperature of which is 1500 °C, is about 600 nm.

The relationship between the diameter of a pore and a mean free path should be considered for evaluating the diffusion coefficient inside the pore.

When the diameter of a pore De is extremely larger than the mean free path $\lambda$, a molecule diffusion coefficient can be used. On the other hand, when the diameter of a pore De is extremely smaller than the mean free path $\lambda$, Knudsen diffusion coefficient has to be used because a gas molecule collides with a pore wall before collides with other molecules.

In the case of the porous-glass-base-material, which is under heat-treatment, if the void ratio of the porous-glass-base-material decreases, the influence of Knudsen diffusion becomes dominant for the diffusion of gas. The molecule diffusion coefficient D and Knudsen diffusion coefficient Dk can be expressed by the following equations (14) and (15), respectively.

$$D = (Vt) \times \lambda/3 \quad (14)$$

$$Dk = (Vt) \times (De)/3 \quad (15)$$

The effective diffusion coefficient De inside the porous body can be expressed by the following equation (16) or (17).

$$De = \varepsilon D/\tau \quad (16)$$

$$De = \varepsilon (Dk)/\tau \quad (17)$$

Here, $\tau$ is a rate of curvature. The value of $\tau$ is generally in the range from 3 to 10.

For example, the effective diffusion coefficient De is calculated for the condition where $\tau = 6$, $\varepsilon = 0.75$, and the average diffusion speed Vt of hydrogen chloride (HCl) gas at the temperature of 1500 °C is 1040 m/s. The calculated effective diffusion coefficient De is $8 \times 10^{-6}$ [m$^2$/s].

Furthermore, the time constant of the diffusion is calculated for the condition where the representative length x of a porous body is 5 cm. Then, the time constant of the diffusion is x2/De = 300 seconds = 5 minutes. This is a value, the order of which is close to the processing time for the conventional dehydration process.

Therefore, in the present embodiment, the diffusion time is set more than 5 minutes when the hydrogen chloride (HCl) gas, the temperature of which is 1500 °C, is used in order to diffuse and discharge the gas inside the pore of the porous-glass-base-material from the porous-glass-base-material before the gas is absorbed into the porous-glass-base-material.

On the other hand, in the vitrification process, the diameter of the pore of the porous-glass-base-material decreases while the porous-glass-base-material shrinks. Therefore, the gas remaining inside the pore may be absorbed into the porous-glass-base-material before the gas remained inside the pore is discharged from the porous-glass-base-material.

Thus, the present embodiment decreases the amount of content of the OH group in the manufactured preform by the following methods.

First, the present embodiment replaces the gas that contains hydrogen, such as hydrogen chloride (HCl) in the gaseous phase, remained inside the pore with the gas, which does not contain hydrogen, for 10 minutes or more after the dehydration process of the porous-glass-base-material.

Second, the vitrification process of the present embodiment controls diffusion speed to be slower than the conventional Vitrification process so that the gas that contains hydrogen (H) can be fully diffused and discharged from the glass-base-material. Thereby, the present embodiment can prevent the absorption of the hydrogen (H) into the porous-glass-base-material during the vitrification process.

Third, the concentration of $H_2O$ impurities in the inert gas, which is used for the dehydration process, the replacement process, and the vitrification process, is controlled to be 1 vol ppm or less. Thereby, the amount of $H_2O$ in the inert gas, which is absorbed into the porous-glass-base-material, canbe decreased. Therefore, the amount of projection of the OH peak can be decreased to 0.05 dB/km or less by controlling the concentration of $H_2O$ impurities in the inert gas to be 1 vol ppm or less.

[Example]

The porous-glass-base-material was heated and dehydrated by moving the porous-glass-base-material in the axial direction of the porous-glass-base-material relative to the heater.

The distance of the soaking section of a heater was 150 mm, and the variation of the temperature in each point of the soaking section was less than 10 °C, and the moving speed of the porous-glass-base-material was set to 10 mm/min.

First, in the dehydration process, the sintering apparatus 100 dehydrated the porous-glass-base-material by heating the porous-glass-base-material with the heating temperature of 1100 °C for the processing time of about 15 minutes in the atmosphere of helium gas, the $H_2O$ content of which was about 10 ppb and the chlorine gas, the chlorine concentration of which was 15 %. Here, the $H_2O$ content of the helium gas used in the dehydration process of the present embodiment, 10 ppb, was smaller than the conventional $H_2O$ content of the helium gas, 1.2 ppm.

Furthermore, the processing time of the porous-glass-base-material 12 is the time when the porous-glass-base-material stays at the heating zone of the heater 22. The processing time mentioned above and below is one of examples, and the present embodiment is not limited to the example mentioned above and below.

Next, in the replacement process, the gas, which contains hydrogen (H), contained in the porous-glass-base-material was replaced with helium gas. The porous-glass-base-material was heated in the atmosphere of helium gas, the $H_2O$ content of which was about 10 ppb and the heating temperature of which was 1100 °C, for the processing time of about 30 minutes.

Next, in the vitrification process, the porous-glass-base-material was heated in the atmosphere of helium gas, the H2O content of which was about 10 ppb and the heating temperature of which was 1500 °C for the processing time of about 30 minutes to be vitrified. Here, the $H_2O$ content of the helium gas used in the vitrification process of the present embodiment, 10 ppb, is smaller than the conventional $H_2O$ content of the helium gas, 1.2 ppm.

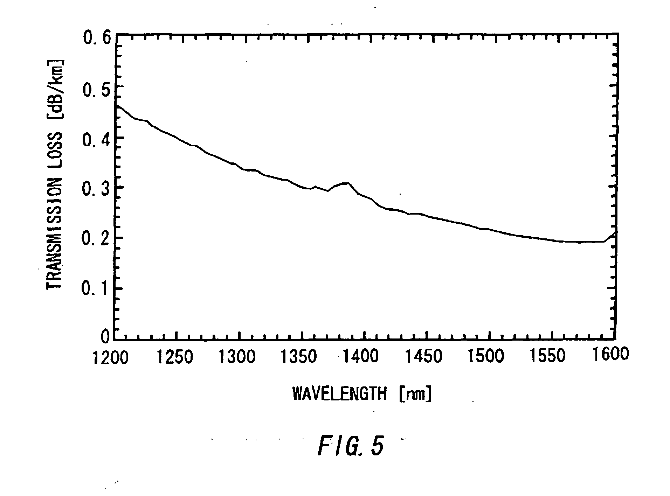

Fig. 5 shows the transmission loss of light in the optical fiber obtained by drawing a preform manufactured by the above-mentioned example. As shown in Fig. 5, the amount of projection of the OH peak was 0.03 dB/km, and which was smaller than 0.05 dB/km.

Thus, the preform manufacture method of the present embodiment can reduce the transmission loss of the optical fiber around the 1385 nm wavelength band. Therefore, the preform manufacture method of the present embodiment can manufacture the preform having an extremely low OH peak, which occurs around 1385 nm wavelength band in the transmission-loss-curve, at low cost.

[Comparative Example 1]

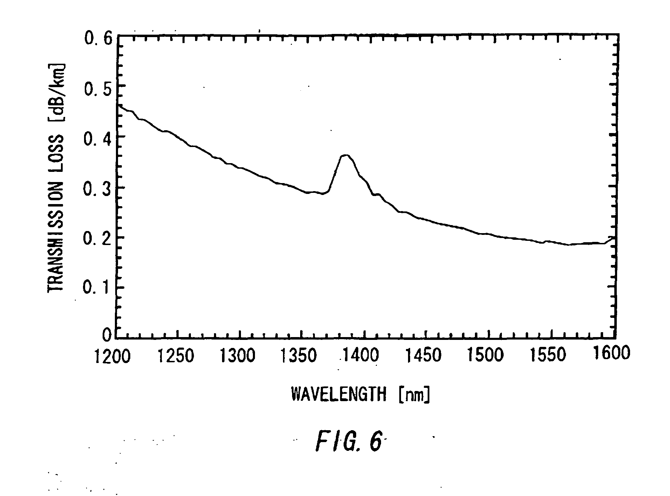

Figure 6 shows the light loss in the optical fiber of the comparative example 1. The porous-glass-base-material was manufactured by the VAD method.

The porous-glass-base-material was heated and dehydrated by moving the porous-glass-base-material in the axial direction of the porous-glass-base-material relative to the heater.

The distance of the soaking section of a heater was 150 mm, and the variation of the temperature in each point of the soaking section was less than 10 °C, and the moving speed of the porous-glass-base-material was set to 10 mm/min.

First, in the dehydration process, the sintering apparatus 100 dehydrated the porous-glass-base-material by heating the porous-glass-base-material with the heating temperature of 1100 °C for 15 minutes in the atmosphere of helium gas, the $H_2O$ content of which was about 1.2 ppm and the chlorine gas, the chlorine concentration of which was 15 %.

Next, in the vitrification process, the porous-glass-base-material was heated in the atmosphere of helium gas, the $H_2O$ content of which was about 1.2 ppm and the heating temperature of which was 1500 °C for 15 minutes to be vitrified.

Fig. 6 shows the transmission loss of light in the optical fiber obtained by drawing a preform manufactured by the comparative example 1. As shown in Fig. 6, 'there is a projection of the OH peak, the'amount of which was 0.14 dB/km, in the wavelength band of about 1385 nm.

Thus, the optical fiber of the comparative example 1 has high transmission loss around the 1385 nm wavelength band.

[Comparative Example 2]

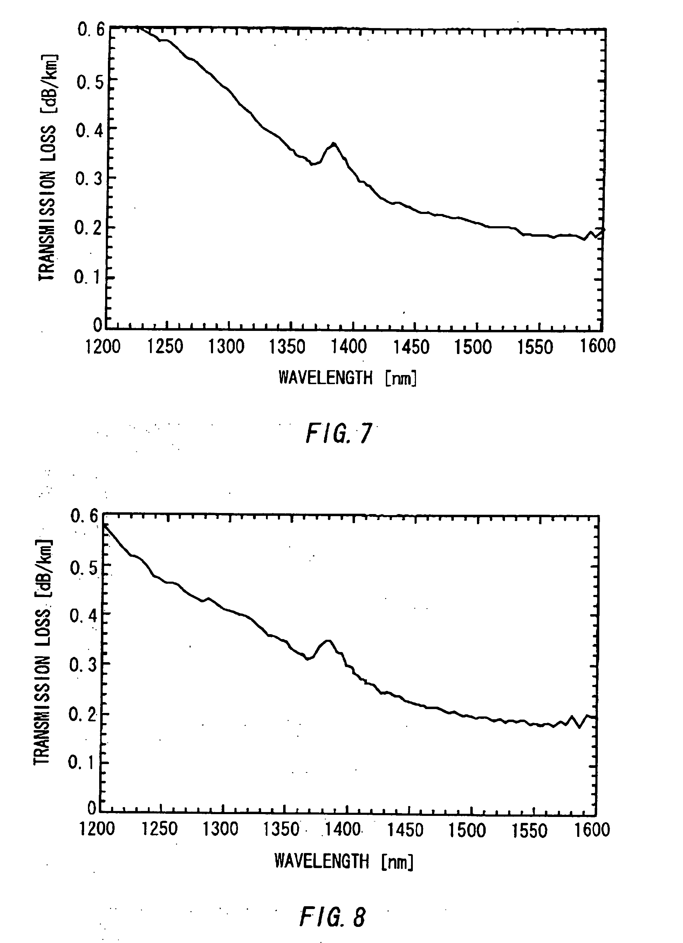

Figure 7 shows the light loss in the optical fiber of the comparative example 2. The porous-glass-base-material was dehydrated and vitrified by the following method.

First, the sintering apparatus 100 dehydrated the porous-glass-base-material by heating the porous-glass-base-material with the heating temperature of 1100°C for 15 minutes in the atmosphere of helium gas, the $H_2O$ content of which was about 1.2 ppm and the chlorine gas, the chlorine concentration of which was 30 %.

Next, the porous-glass-base-material was heated in the atmosphere of helium gas, the $H_2O$ content of which was about 1.2 ppm and the heating temperature of which was 1500 °C for 15 minutes to be vitrified.

Fig. 7 shows the transmission loss of light in the optical fiber obtained by drawing a preform manufactured by the comparative example 2. As shown in Fig. 7, there is a projection of the OH peak, the amount of which was 0.10 dB/km, in the wavelength band of about 1385 nm. Thus, the optical fiber of the comparative example 2 has high transmission loss around the 1385 nm wavelength band.

[Comparative Example 3]

Figure 8 shows the light loss in the optical fiber of the comparative example 3. The porous-glass-base-material was dehydrated and vitrified by the following method.

First, the sintering apparatus 100 dehydrated the porous-glass-base-material by heating the porous-glass-base-material with the heating temperature of 1100 °C for 30 minutes in the atmosphere of helium gas, the $H_2O$ content of which was about 1.2 ppm and the chlorine gas, the chlorine concentration of which was 30 %.

Next, theporous-glass-base-material was heated in the atmosphere of helium gas, the $H_2O$ content of which was about 1.2 ppm and the heating temperature of which was 1500 °C for 15 minutes to be vitrified.

Fig. 8 shows the transmission loss of light in the optical fiber obtained by drawing a preform manufactured by the comparative example 3. As shown in Fig. 8, there is a projection of the OH peak, the amount of which was 0.11 dB/km, in the wavelength band of about 1385 nm. Thus, the optical fiber of the comparative example 3 has high transmission loss around the 1385 nm wavelength band.

As explained in the above-mentioned comparative example 1 to comparative example 3, the OH peak could not be reduced less than 0.05 db/km, even if the chlorine concentration and the dehydration process time were increased in the dehydrationprocess.

On the other hand, since the preform manufacturing method of the present embodiment can reduce the amount of the OH peak around the wavelength band of 1385 nm, the method can manufacture a preform having very small transmission loss of an optical fiber.

Although the present invention has been described by way of exemplary embodiments, it should be understood that those skilled in the art might make many changes and substitutions without departing from the scope of the present invention which is defined only by the appended claims.

**Claims**

1. A method for manufacturing a preform (200), which is a base material of an optical fiber, comprising

forming porous-glass-base-material (12) by accumulating glass particles;
dehydrating said porous-glass-base-material (12) by heating said porous-glass-base-material (12) in an atmosphere of gas that contains chlorine; heating said porous-glass-base-material (12) dehydrated by said dehydrating with a first heating temperature in an atmosphere of a first inert gas; and
vitrifying said porous-glass-base-material (12) by heating said porous-glass-base-material with a second heating temperature in an atmosphere of second inert gas;
**characterized in that** said heating replaces gas remaining inside said porous-glass-base-material (12) with said first inert gas by placing said dehydrated porous-glass-base-material (12) in an atmosphere of said first inert gas,

$H_2O$ content of which is 1 vol ppm or less.

2. A method for manufacturing a preform (200), which is a base material of an optical fiber, comprising forming porous-glass-base-material (12) by accumulating glass particles;
dehydrating said porous-glass-base-material (12) by heating said porous-glass-base-material (12) in an atmosphere of gas that contains chlorine; heating said porous-glass-base-material (12) dehydrated by said dehydrating with a first heating temperature in an atmosphere of a first inert gas; and
vitrifying said porous-glass-base-material (12) by heating said porous-glass-base-material with a second heating temperature in an atmosphere of second inert gas;
**characterized in that** said heating replaces gas remaining inside said porous-glass-base-material (12) with said first inert gas; and
said vitrifying vitrifies said porous-glass-base-material (12) by heating said porous-glass-base-material (12) in an atmosphere of said second inert gas, H20 content of which is 1 vol ppm or less.

3. A method as claimed in claim 1 or 2, **characterized in that** said first heating temperature is 1000°C or over.

4. A method as claimed in claim 1 or 2, **characterized in that** said second heating temperature is 1500°C or over.

5. A method as claimed in claim 1 or 2, **characterized in that** said forming forms said porous-glass-base-material (12) by a VAD, Vapor-phase Axial Deposition, method.

6. A method as claimed in any one of claims 1 through 5, **characterized in that** said gas that contains chlorine contains at least one of chlorine and thionyl chlorate.

7. A method as claimed in any one of claims 1 through 6, **characterized in that** said first inert gas is helium.

8. A method as claimed in any one of claims 1 through 7, **characterized in that** said second inert gas is helium, argon, or nitrogen.

9. A method as claimed in any one of claims 1 through 8, **characterized in that** said gas that contains chlorine is diluted with third inert gas.

10. A method as claimed in claim 9, **characterized in that** $H_2O$ content of said third inert gas is 1 vol ppm or less.

11. A method as claimed in claim 9 or 10, **characterized in that** said third inert gas is helium.

12. A method as claimed in any one of claims 1 through 11, **characterized in that** said dehydrating heats said porous-glass-base-material (12) such that a void ratio of said porous-glass-base-material (12) dehydrated by said dehydrating to be 0.6 or over, the void ratio $\varepsilon$ being defined by $v_p = v_s \times \varepsilon/\varepsilon$-1), with $v_p$ the volume of all pores in the unit volume and $s_p$ the surface area of all pores in the unit volume.

13. A method as claimed in claim 12, **characterized in that** said dehydrating heats said porous-glass-base-material (12) such that time, which is required for decreasing the void ratio of said porous-glass-base-material (12) continuously from an initial value of said void ratio before beginning said dehydrating to a value equal to 0.6, to be 10 minutes or more.

14. A method as claimed in any one of claims 1 through 13, **characterized in that** said vitrifying moves said porous-glass-base-material (12) relative to a heater that heats said porous-glass-base-material (12) so that a void ratio of said porous-glass-base-material (12) decreases continuously, the void ratio $\varepsilon$ being defined by $v_p = v_s \times \varepsilon/\varepsilon$-1), with $v_p$ the volume of all pores in the unit volume and $s_p$ the surface area of all pores in the unit volume.

15. A method as claimed in any one of claims 1 through 14, **characterized in that** said heating heats said porous-glass-base-material (12) with said first heating temperature for 10 minutes or more.

16. A method as claimed in claim 15, **characterized in that** said heating heats said porous-glass-base-material (12) with said first heating temperature for 30 minutes or more.

17. A method as claimed in any one of claims 1 through 16, **characterized in that** said heating replaces gas remaining inside said porous-glass-base-material (12), with said first inert gas in an atmosphere of said first inert gas, the $H_2O$ content of which is 100 vol ppb or less.

18. A method as claimed in any one of claims 1 through 17, **characterized in that** said vitrifying vitrifies said porous-glass-base-material (12) by heating said porous-glass-base-material (12) in an atmosphere of second inert gas, the $H_2O$ content of which is 100 vol ppb or less.

19. A method as claimed in any one of claims 1 through 18, further comprising forming second clad (34) around said outside surface of said porous-glass-base-material (12) vitrified by said vitrifying.

**Patentansprüche**

1. Verfahren zum Herstellen eines Vorformlings (200), der ein Basismaterial für eine optische Faser ist, aufweisend:

   Formen eines porösen Glasbasismaterials (12) durch Akkumulieren von Glasteilchen;
   Dehydratisieren des porösen Glasbasismaterials (12) durch Erwärmen des porösen Glasbasismaterials (12) in einer Gasatmosphäre, die Chlor enthält;
   Erwärmen des durch das Dehydratisieren dehydrierten porösen Glasbasismaterials (12) bei einer ersten Erwärmungstemperatur in einer Atmosphäre aus einem ersten inerten Gas; und
   Sintern des porösen Glasbasismaterials (12) durch Erwärmen des porösen Glasbasismaterials bei einer zweiten Erwärmungstemperatur in einer Atmosphäre aus einem zweiten inerten Gas;
   **dadurch gekennzeichnet, dass** das Erwärmen innerhalb des porösen Glasbasismaterials (12) verbliebenes Gas durch das erste inerte Gas ersetzt durch Anordnen des dehydrierten porösen Glasbasismaterials (12) in einer Atmosphäre aus dem ersten inerten Gas, dessen $H_2O$-Gehalt 1 Vol-ppm oder weniger beträgt.

2. Verfahren zum Herstellen eines Vorformlings (200), der ein Basismaterial für eine optische Faser ist, aufweisend:

   Bilden eines porösen Glasbasismaterials (12) durch Akkumulieren von Glasteilchen;
   Dehydratisieren des porösen Glasbasismaterials (12) durch Erwärmen des porösen Glasbasismaterials (12) in einer Gasatmosphäre, die Chlor enthält;
   Erwärmen des durch das Dehydratisieren dehydrierten porösen Glasbasismaterials (12) bei einer ersten Erwärmungstemperatur in einer Atmosphäre aus einem ersten inerten Gas; und
   Sintern des porösen Glasbasismaterials (12) durch Erwärmen des porösen Glasbasismaterials bei einer zweiten Erwärmungstemperatur in einer Atmosphäre aus einem zweiten inerten Gas;
   **dadurch gekennzeichnet, dass** das Erwärmen innerhalb des porösen Glasbasismaterials (12) verbliebenes Gas durch das erste inerte Gas ersetzt; und
   das Sintern das poröse Glasbasismaterial (12) durch Erwärmen des porösen Glasbasismaterials (12) in einer Atmosphäre aus dem zweiten inerten Gas, dessen $H_2O$-Gehalt 1 Vol.-ppm oder weniger beträgt, sintert.

3. Verfahren nach Anspruch 1 oder 2, **dadurch gekennzeichnet, dass** die erste Erwärmungstemperatur 1000°C oder darüber beträgt.

4. Verfahren nach Anspruch 1 oder 2, **dadurch gekennzeichnet, dass** die zweite Erwärmungstemperatur 1500°C oder mehr beträgt.

5. Verfahren nach Anspruch 1 oder 2, **dadurch gekennzeichnet, dass** das Bilden das poröse Glasbasismaterial (12) durch ein VAD-, axiales Dampfphasenabscheidungs-, Verfahren bildet.

6. Verfahren nach einem der Ansprüche 1 bis 5, **dadurch gekennzeichnet, dass** das Chlor enthaltende Gas Chlor und/oder Thionylchlorat enthält.

7. Verfahren nach einem der Ansprüche 1 bis 6, **dadurch gekennzeichnet, dass** das erste inerte Gas Helium ist.

8. Verfahren nach einem der Ansprüche 1 bis 7, **dadurch gekennzeichnet, dass** das zweite inerte Gas Helium, Argon oder Stickstoff ist.

9. Verfahren nach einem der Ansprüche 1 bis 8, **dadurch gekennzeichnet, dass** das Chlor enthaltende Gas durch ein drittes inertes Gas verdünnt ist.

**10.** Verfahren nach Anspruch 9, **dadurch gekennzeichnet, dass** der $H_2O$-Gehalt des dritten inerten Gases gleich 1 Vol-ppm oder weniger ist.

**11.** Verfahren nach Anspruch 9 oder 10, **dadurch gekennzeichnet, dass** das dritte inerte Gas Helium ist.

**12.** Verfahren nach einem der Ansprüche 1 bis 11, **dadurch gekennzeichnet, dass** das Dehydratisieren das poröse Glasbasismaterial (12) derart erwärmt, dass ein Porenverhältnis des durch das Dehydratisieren dehydrierte poröse Glasbasismaterials (12) 0,6 oder darüber ist, wobei das Porenverhältnis $\varepsilon$ durch $v_p = v_s \times \varepsilon/\varepsilon$-1) definiert ist, mit $v_p$ gleich dem Volumen aller Poren in dem Einheitsvolumen und $s_p$ gleich der Oberfläche aller Poren in dem Einheitsvolumen.

**13.** Verfahren nach Anspruch 12, **dadurch gekennzeichnet, dass** das Dehydratisieren das poröse Glasbasismaterial (12) derart erwärmt, dass die Zeit, die erforderlich ist zum kontinuierlichen Verringern des Porenverhältnisses des porösen Glasbasismaterials (12) von einem Anfangswert des Porenverhältnisses vor dem Beginn des Dehydratisierens auf einen Wert gleich 0,6, 10 Minuten oder mehr beträgt.

**14.** Verfahren nach einem der Ansprüche 1 bis 13, **dadurch gekennzeichnet, dass** das Sintern das poröse Glasbasismaterial (12) relativ zu einer Heizvorrichtung bewegt, die das poröse Glasbasismaterial (12) so erwärmt, dass ein Porenverhältnis des porösen Glasbasismaterials (12) kontinuierlich abnimmt, wobei das Porenverhältnis $\varepsilon$ definiert ist durch $v_p = v_s \times \varepsilon/\varepsilon$-1), mit $v_p$ gleich dem Volumen aller Poren in dem Einheitsvolumen und $s_p$ gleich der Oberfläche aller Poren in dem Einheitsvolumen.

**15.** Verfahren nach einem der Ansprüche 1 bis 14, **dadurch gekennzeichnet, dass** das Erwärmen das poröse Glasbasismaterial (12) bei der ersten Erwärmungstemperatur während 10 Minuten oder länger erwärmt.

**16.** Verfahren nach Anspruch 15, **dadurch gekennzeichnet, dass** das Erwärmen das poröse Glasbasismaterial (12) bei der ersten Erwärmungstemperatur während 30 Minuten oder länger erwärmt.

**17.** Verfahren nach einem der Ansprüche 1 bis 16, **dadurch gekennzeichnet, dass** das Erwärmen innerhalb des porösen Glasbasismaterials (12) verbliebenes Gas in einer Atmosphäre aus dem ersten inerten Gas, dessen $H_2O$-Gehalt 100 Vol.-ppb oder weniger beträgt, durch das inerte Gas ersetzt.

**18.** Verfahren nach einem der Ansprüche 1 bis 17, **dadurch gekennzeichnet, dass** das Sintern das poröse Glasbasismaterial (12) durch Erwärmen des porösen Glasbasismaterials (12) in einer Atmosphäre aus dem zweiten inerten Gas, dessen $H_2O$-Gehalt 100 Vol.-ppb oder weniger beträgt, sintert.

**19.** Verfahren nach einem der Ansprüche 1 bis 18, weiterhin aufweisend das Bilden eines zweiten Mantels (34) um die Außenfläche des durch das Sintern gesinterten porösen Glasbasismaterials (12).

**Revendications**

**1.** Procédé pour fabriquer une préforme (200), qui est un matériau de base d'une fibre optique, comprenant
la formation d'un matériau de base de verre poreux (12) par accumulation de particules de verre ;
la déshydratation dudit matériau de base de verre poreux (12) par chauffage dudit matériau de base de verre poreux (12) dans une atmosphère de gaz qui contient du chlore ;
le chauffage dudit matériau de base de verre poreux (12) déshydraté par ladite déshydratation à une première température de chauffage dans une atmosphère d'un premier gaz inerte; et
la vitrification dudit matériau de base de verre poreux (12) par chauffage dudit matériau de base de verre poreux avec une deuxième température de chauffage dans une atmosphère de deuxième gaz inerte ;
**caractérisé en ce que** ledit chauffage remplace le gaz restant à l'intérieur dudit matériau de base de verre poreux (12) par ledit premier gaz inerte en plaçant ledit matériau de base de verre poreux déshydraté (12) dans une atmosphère dudit premier gaz inerte, dont la teneur en $H_2O$ est de 1 ppm en volume ou moins.

**2.** Procédé pour fabriquer une préforme (200), qui est un matériau de base d'une fibre optique, comprenant
la formation d'un matériau de base de verre poreux (12) par accumulation de particules de verre ;

la déshydratation dudit matériau de base de verre poreux (12) par chauffage dudit matériau de base de verre poreux (12) dans une atmosphère de gaz qui contient du chlore ;

le chauffage dudit matériau de base de verre poreux (12) déshydraté par ladite déshydratation à une première température de chauffage dans une atmosphère d'un premier gaz inerte ; et

la vitrification dudit matériau de base de verre poreux (12) par chauffage dudit matériau de base de verre poreux à une deuxième température de chauffage dans une atmosphère de deuxième gaz inerte ;

**caractérisé en ce que** ledit chauffage remplace le gaz restant à l'intérieur dudit matériau de base de verre poreux (12) par ledit premier gaz inerte ; et

ladite vitrification vitrifie ledit matériau de base de verre poreux (12) par chauffage dudit matériau de base de verre poreux (12) dans une atmosphère dudit deuxième gaz inerte, dont la teneur en $H_2O$ est 1 ppm en volume ou moins.

3. Procédé selon la revendication 1 ou 2, **caractérisé en ce que** ladite première température de chauffage est de 1000 °C ou plus.

4. Procédé selon la revendication 1 ou 2, **caractérisé en ce que** ladite deuxième température de chauffage est de 1500 °C ou plus.

5. Procédé selon la revendication 1 ou 2, **caractérisé en ce que** ladite formation forme ledit matériau de base de verre poreux (12) par un procédé de dépôt axial en phase vapeur, VAD.

6. Procédé selon l'une quelconque des revendications 1 à 5, **caractérisé en ce que** ledit gaz qui contient du chlore contient au moins l'un parmi le chlore et le chlorate de thionyle.

7. Procédé selon l'une quelconque des revendications 1 à 6, **caractérisé en ce que** ledit premier gaz inerte est l'hélium.

8. Procédé selon l'une quelconque des revendications 1 à 7, **caractérisé en ce que** ledit deuxième gaz inerte est l'hélium, l'argon, ou l'azote.

9. Procédé selon l'une quelconque des revendications 1 à 8, **caractérisé en ce que** ledit gaz qui contient du chlore est dilué avec un troisième gaz inerte.

10. Procédé selon la revendication 9, **caractérisé en ce que** la teneur en $H_2O$ dudit troisième gaz inerte est de 1 ppm en volume ou moins.

11. Procédé selon la revendication 9 ou 10, **caractérisé en ce que** ledit troisième gaz inerte est l'hélium.

12. Procédé selon l'une quelconque des revendications 1 à 11, **caractérisé en ce que** ladite déshydratation chauffe ledit matériau de base de verre poreux (12) de sorte qu'un taux de porosité dudit matériau de base de verre poreux (12) déshydraté par ladite déshydratation est de 0,6 ou plus, le taux de porosité $\varepsilon$ étant défini par $v_p = v_s \times \varepsilon/\varepsilon\text{-}1$, $v_p$ étant le volume de tous les pores par unité de volume et $s_p$ la surface de tous les pores dans l'unité de volume.

13. Procédé selon la revendication 12, **caractérisé en ce que** ladite déshydratation chauffe ledit matériau de base de verre poreux (12) de sorte que le temps qui est requis pour diminuer le taux de porosité dudit matériau de base de verre poreux (12) en continu d'une valeur initiale dudit taux de porosité avant de commencer ladite déshydratation à une valeur égale à 0,6, soit de 10 minutes ou plus.

14. Procédé selon l'une quelconque des revendications 1 à 13, **caractérisé en ce que** ladite vitrification déplace ledit matériau de base de verre poreux (12) par rapport à un dispositif de chauffage qui chauffe ledit matériau de base de verre poreux (12) de sorte que le taux de porosité dudit matériau de base de verre poreux (12) diminue en continu, le taux de porosité $\varepsilon$ étant défini par $v_p = v_s \times \varepsilon/\varepsilon\text{-}1)$, avec $v_p$ étant le volume de tous les pores par unité de volume et $s_p$ la surface de tous les pores dans l'unité de volume.

15. Procédé selon l'une quelconque des revendications 1 à 14, **caractérisé en ce que** ledit chauffage chauffe ledit matériau de base de verre poreux (12) à ladite première température de chauffage pendant 10 minutes ou plus.

16. Procédé selon la revendication 15, **caractérisé en ce que** ledit chauffage chauffe ledit matériau de base de verre poreux (12) à ladite première température de chauffage pendant 30 minutes ou plus.

**17.** Procédé selon l'une quelconque des revendications 1 à 16, **caractérisé en ce que** ledit chauffage remplace le gaz restant à l'intérieur dudit matériau de base de verre poreux (12), par ledit premier gaz inerte dans une atmosphère dudit premier gaz inerte, dont la teneur en $H_2O$ est de 100 ppb en volume ou moins.

**18.** Procédé selon l'une quelconque des revendications 1 à 17, **caractérisé en ce que** ladite vitrification vitrifie ledit matériau de base de verre poreux (12) par chauffage dudit matériau de base de verre poreux (12) dans une atmosphère de deuxième gaz inerte, dont la teneur en $H_2O$ est de 100 ppb en volume ou moins.

**19.** Procédé selon l'une quelconque des revendications 1 à 18, comprenant en outre la formation d'une deuxième gaine (34) autour de ladite surface extérieure dudit matériau de base de verre poreux (12) vitrifié par ladite vitrification.

WAVELENGTH [nm]

*RELATED ART*
*FIG. 1*

FIG. 2

200

34

32

10

FIG. 3

```
          ┌──────────┐
          │  START   │
          └────┬─────┘
               │                    ╭ S100
     ┌─────────┴──────────┐
     │   FORMING POROUS   │
     │ GLASS BASE MATERIAL │
     └─────────┬──────────┘
               │                    ╭ S102
     ┌─────────┴──────────┐
     │    DEHYDRATION     │
     └─────────┬──────────┘
               │                    ╭ S104
     ┌─────────┴──────────┐
     │    REPLACEMENT     │
     └─────────┬──────────┘
               │                    ╭ S106
     ┌─────────┴──────────┐
     │   VITRIFICATION    │
     └─────────┬──────────┘
               │                    ╭ S108
     ┌─────────┴──────────┐
     │    ADDING  CLAD    │
     └─────────┬──────────┘
               │
          ┌────┴─────┐
          │   END    │
          └──────────┘
```

*FIG. 4*

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 09309735 B

- WO 9323341 A